# EUROPEAN PATENT SPECIFICATION

(11) **EP 4 060 788 B1**
(45) Date of publication and mention of the grant of the patent: **25.02.2026**
(21) Application number: 21808019.0
(22) Date of filing: 24.05.2021
(51) Int. Cl.: H01M 10/44, H01M 10/04, H01M 4/04

(54) **SECONDARY BATTERY ACTIVATION METHOD**
VERFAHREN ZUR AKTIVIERUNG EINER SEKUNDÄRBATTERIE
PROCÉDÉ D'ACTIVATION DE BATTERIE RECHARGEABLE

(30) Priority: 22.05.2020 KR 20200061573
(43) Date of publication of application: 21.09.2022
(73) Proprietor: LG Energy Solution, Ltd., Seoul 07335 (KR)
(72) Inventor: LEE, Won Jong, Daejeon 34122 (KR); PARK, Tae Soon, Daejeon 34122 (KR); KIM, Ho Young, Daejeon 34122 (KR); KANG, Suk Hyun, Daejeon 34122 (KR); KWON, Hyun Jung, Daejeon 34122 (KR); YU, Hyun Jin, Daejeon 34122 (KR)
(74) Representative: Goddar, Heinz J.
(86) International application number: PCT/KR2021/006437
(87) International publication number: WO 2021/235905

(56) References cited:
- WO-A1-2020/071848
- CN-A- 110 635 170
- KR-A- 20150 031 018
- KR-A- 20170 100 971
- KR-A- 20180 082 759
- KR-A- 20190 134 179
- KR-A- 20190 134 179
- KR-B1- 101 106 359

## Description

### [Technical Field]

The present invention relates to a method of activating a secondary battery, and more particularly, to a method of activating a secondary battery capable of increasing the remaining amount of an electrolyte solution inside an electrode in a secondary battery.

### [Background Art]

From KR 2019 0134179 A there is known an apparatus and a method for effectively evaluating swelling characteristics of an electrolyte in a lithium secondary battery monocell. A monocell preparation step is disclosed including the process steps of aging, forming, and degassing the monocell injected with the electrolyte solution at room temperature. These steps may be followed by a monocell charging step which may include charging at 3V to 5V, preferably 4V to 4.5V.

In general, a secondary battery, unlike a primary battery that cannot be charged, means a battery that can be charged and discharged, and is widely used in electronic devices such as mobile phones, notebook computers, camcorders, or electric vehicles. In particular, the lithium secondary battery has a larger capacity than a nickel-cadmium battery or a nickel-metal hydride battery, and because the energy density per unit weight is high, the degree of utilization thereof is rapidly increasing.

The lithium secondary battery mainly uses a lithium-based oxide and a carbon material as a positive electrode active material and a negative electrode active material, respectively. The lithium secondary battery includes an electrode assembly, in which a positive electrode plate and a negative electrode plate coated with the positive electrode active material and the negative electrode active material, respectively, are disposed with a separator therebetween, and an exterior material that seals and stores the electrode assembly together with the electrolyte.

Meanwhile, the lithium secondary battery may be classified into a can-type secondary battery in which the electrode assembly is embedded in a metal can and a pouch-type secondary battery in which the electrode assembly is embedded in a pouch of an aluminum laminate sheet, depending on the shape of the battery case.

A secondary battery is generally manufactured through a process in which a liquid electrolyte is injected while the electrode assembly is stored in the battery case, and the battery case is sealed. The battery structure of the prepared battery becomes stable and usable by performing a formation process of repeating a constant charge/discharge process.

Recently, however, these secondary batteries tend to be manufactured to operate at high voltages to ensure maximum capacity in a limited space. As such, in the case that the capacity of the battery increases, in order to allow the battery to be operated, it is necessary to secure a more remaining amount of an electrolyte solution inside the electrode.

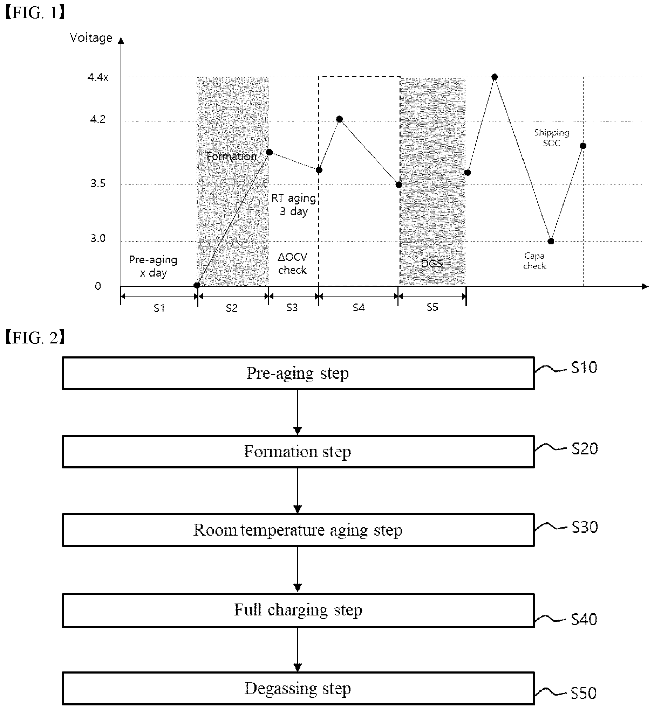

FIG. 1 is a schematic diagram showing step-by-step process conditions of a conventional activation process. Referring to FIG. 1, the conventional activation process includes pre-aging a battery (S1), initial-charging the pre-aged battery (S2), aging the initial-charged battery (S3), repeating charge/discharge (S4), and performing a degassing process. However, in such a conventional battery cell activation process, there was a problem that the electrolyte solution was not sufficiently permeated into the inside of the electrode even at the repetition of charge/discharge. Therefore, it is necessary to develop a technology for securing a sufficient remaining amount of the electrolyte solution at the inside of the electrode.

### [Disclosure]

### [Technical Problem]

The present invention has been devised to solve the above problems, and an object of the present invention is to provide an activation method of a secondary battery to sufficiently secure the remaining amount of the electrolyte solution while showing a sufficient capacity with a high voltage. Further, another object of the present invention is to provide an activation method of a secondary battery capable of minimizing the thickness of the electrode while securing a sufficient remaining amount of the electrolyte solution inside the electrode.

### [Technical Solution]

In one example, a method of activating a secondary battery according to the present invention includes: a pre-aging step of aging a secondary battery, where an electrode assembly and an electrolyte solution are accommodated in a battery case, at a room temperature; an formation step of initial-charging the pre-aged secondary battery; a room temperature aging step of aging the initial-charged secondary battery at a room temperature; a step of full-charging the room-temperature-aged secondary battery to a voltage of 4.4V or more; and a degassing step of removing gas inside the secondary battery.

In a specific example, in the formation step, the secondary battery is charged to reach a voltage in a range corresponding to 55 to 90% of a full-charge voltage.

In a specific example, the room temperature aging step includes a process of measuring an open circuit voltage (OCV) of the secondary battery and determining whether the secondary battery has a low voltage defect.

In one example, the step of full-charging the secondary battery includes a process of constant current (CC)-charging the secondary battery until reaching a full-charge voltage, a process of constant voltage (CV)-charging the secondary battery having reached the full-charge voltage, and a process of constant current (CC)-discharging the CV-charged secondary battery.

In one specific example, the process of CC-charging the secondary battery includes charging the secondary battery at a C-rate of 0.5 to 0.9C.

In one specific example, the process of CV-charging the secondary battery includes charging the secondary battery by a full-charge voltage until reaching a cutoff current of a CC-charge current value or less.

The process of CC-discharging the secondary battery includes discharging the full-charged secondary battery until reaching a voltage corresponding to 80% of the full-charge voltage or a full-discharge voltage.

In a specific example, the method of activating the secondary battery according to the present invention further includes a process of recharging the CC-discharged secondary battery until reaching a preset shipping voltage.

In another example, the step of full-charging the secondary battery includes a process of CC-charging the secondary battery until reaching a full-charge voltage, and a process of CC-discharging the secondary battery having reached the full-charge voltage, wherein the CC-charging process and the CC-discharging process are consecutively performed.

In a specific example, an additional charging step of second-charging the secondary battery is further performed between the room temperature aging step and the step of full-charging the secondary battery.

In a specific example, a step of shipping-charging the secondary battery is further performed after the degassing step.

At this time, the step of shipping-charging the secondary battery includes a process of charging the secondary battery to reach a preset shipping voltage after performing a full charge and a full discharge for the secondary battery from which internal gas has been removed.

In one example, a step of aging the secondary battery at a room temperature further performed after the step of shipping-charging the secondary battery.

In a specific example, the step of full-charging the secondary battery and the step of shipping-charging the secondary battery include a step of checking a charging capacity of the secondary battery.

The present invention also provides a method of manufacturing a secondary battery including the method of activating the secondary battery.

### [Advantageous Effects]

According to the activation method of the secondary battery of the present invention, the remaining amount of the electrolyte solution inside the electrode may be increased by full-charging the secondary battery with a voltage of 4.4V or more. Further, in the present invention, it is possible to prevent an excessive increase of the thickness of the electrode by performing CC discharge right after CC charge without CV charge in the full-charging process. Through this, high capacity secondary batteries having cycle characteristics may be manufactured.

### [Brief Description of the Drawings]

FIG. 1 is a graph showing a process of performing an activation method according to a conventional art.
FIG. 2 is a flowchart illustrating a process of the activation method according to the present invention.
FIG. 3 is a graph showing the process of the activation method according to an embodiment of the present invention.
FIG. 4 is a graph showing the process of the activation method according to another embodiment of the present invention.
FIG. 5 is a graph showing the remaining amount of an electrolyte solution according to examples and a comparative example of the present invention.
FIG. 6 is a graph showing the remaining amount of an electrolyte solution according to examples 2 to 6 of the present invention.
FIG. 7 is a graph showing a change in thickness of an electrode according to an embodiment of the present invention.

### [Detailed Description of the Preferred Embodiments]

Hereinafter, the present invention will be described in detail with reference to the drawings. The terms and words used in the present specification and claims should not be construed as limited to ordinary or dictionary meanings and the inventor may properly define the concept of the terms in order to best describe its invention. The terms and words should be construed as meaning and concept consistent with the technical idea of the present invention.

In this application, it should be understood that terms such as "include" or "have" are intended to indicate that there is a feature, number, step, operation, component, part, or a combination thereof described on the specification, and they do not exclude in advance the possibility of the presence or addition of one or more other features or numbers, steps, operations, components, parts or combinations thereof. Also, when a portion such as a layer, a film, an area, a plate, etc. is referred to as being "on" another portion, this includes not only the case where the portion is "directly on" the another portion but also the case where further another portion is interposed therebetween. On the other hand, when a portion such as a layer, a film, an area, a plate, etc. is referred to as being "under" another portion, this includes not only the case where the portion is "directly under" the another portion but also the case where further another portion is interposed therebetween. In addition, to be disposed "on" in the present application may include the case disposed at the bottom as well as the top.

Hereinafter, the present invention will be described in detail with reference to the drawings.

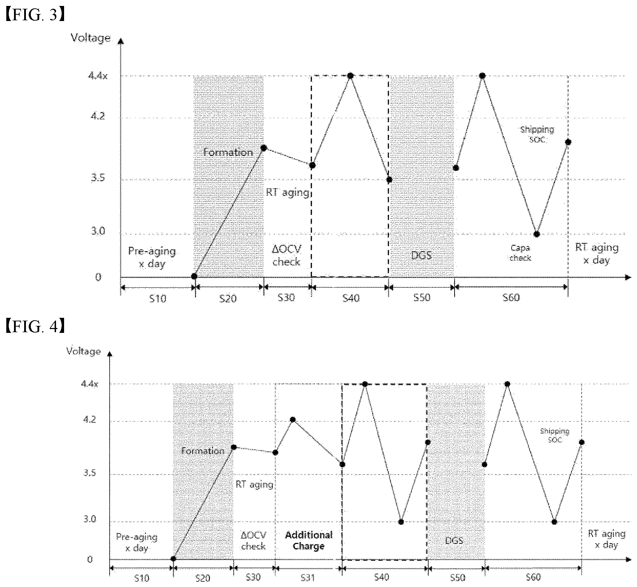

FIG. 2 is a flowchart illustrating a process of the activation method according to the present invention, and FIG. 3 is a graph showing the process of the activation method according to an embodiment of the present invention.

Referring to FIGS. 2 and 3, a method of activating a secondary battery according to an embodiment of the present invention includes: a pre-aging step (S10) of aging a secondary battery, where an electrode assembly and an electrolyte solution are accommodated in a battery case, at a room temperature; an formation step (S20) of initial-charging the pre-aged secondary battery; a room temperature aging step (S30) of aging the initial-charged secondary battery at a room temperature; a step (S40) of full-charging the room-temperature-aged secondary battery to a voltage of 4.4V or more; and a degassing step (S50) of removing gas inside the secondary battery.

It has been found that in the charging step after the room temperature aging, if the secondary battery is charged with a high voltage of 4.4V or more, the remaining amount of the electrolyte solution inside the electrode has increased, and the capacity of the battery has increased, and the inventors of the present invention have reached the present invention based thereon.

Hereinafter, the present invention will be described in detail.

The secondary battery may be manufactured by accommodating an electrode assembly, in which a positive electrode, a negative electrode, and a separator are alternately stacked, in a battery case and injecting an electrolyte solution. The step of assembling such a battery is not particularly limited and can be performed according to a known method.

In addition, the electrode assembly is not particularly limited as long as it is a structure including a positive electrode, a negative electrode, and a separator interposed between the positive electrode and the negative electrode, and may be, for example, a jelly-roll type, a stack type, or a stack/folding type.

The battery case is not particularly limited as long as it is used as an exterior material for packaging the battery, and a cylindrical, square, or pouch type may be used and specifically a pouch-type battery case may be used.

The electrolyte includes an organic solvent and a lithium salt, and may optionally further contain an additive.

The organic solvent is not limited as long as decomposition by an oxidation reaction or the like during charging and discharging of the battery can be minimized, and may be, for example, cyclic carbonate, linear carbonate, ester, ether, or ketone. These may be used alone, or two or more of them may be used in combination.

Among the organic solvents, carbonate-based organic solvents can be preferably used. Examples of cyclic carbonates include ethylene carbonate (EC), propylene carbonate (PC) and butylene carbonate (BC). Linear carbonates include dimethyl carbonate (DMC), diethyl carbonate (DEC), dipropyl carbonate (DPC), ethyl methyl carbonate (EMC), methylpropyl carbonate (MPC), and ethylpropyl carbonate (EPC).

Lithium salts commonly used in electrolytes of lithium secondary batteries such as LiPF₆, LiAsF₆, LiCF₃SO₃, LiN(CF₃SO₂)₂, LiBF₄, LiBF₆, LiSbF₆, LiN(C₂F₅SO₂)₂, LiAlO₄, LiAlCl₄, LiSO₃CF₃ and LiClO₄, etc. can be used for the lithium salt without limitation, and these can be used alone, two or more can be used in combination.

In addition, the electrolyte may optionally further include an additive. Any one or a mixture of two or more selected from a group consisting of vinylene carbonate, vinylethylene carbonate, fluoroethylene carbonate, cyclic sulfite, saturated sultone, unsaturated sultone, acyclic sulfone, lithium oxalyl difluoroborate (LiODFB), and derivatives thereof may be used as the additive in order to stably form an SEI film, but not limited thereto.

The cyclic sulfite may include ethylene sulfite, methyl ethylene sulfite, ethyl ethylene sulfite, 4,5-dimethyl ethylene sulfite, 4,5-diethyl ethylene sulfite, propylene sulfite, 4,5-dimethyl propylene sulfite, 4,5-diethyl propylene sulfite, 4,6-dimethyl propylene sulfite, 4,6-diethyl propylene sulfite, 1,3-butylene glycol sulfite, etc. Saturated sultone may include 1,3-propane sultone and 1,4-butane sultone, etc. Unsaturated sultone may include ethene sultone, 1,3-propene sultone, 1,4-butene sultone, and 1-methyl-1,3-propene sultone. The acyclic sulfone may include divinyl sulfone, dimethyl sulfone, diethyl sulfone, methylethyl sulfone, and methylvinyl sulfone.

These additives are added to the electrolyte to improve low temperature output characteristics by forming a solid SEI film on the negative electrode, as well as to suppress decomposition of the positive electrode surface and prevent oxidation reaction of the electrolyte during high temperature cycle operation.

Likewise, the battery, into which the electrolyte solution has been injected, goes through a pre-aging step (S10) at a room temperature. The pre-aging step (S10) is a step of aging the battery so that the electrolyte solution is sufficiently impregnated in the electrode and the separator after assembly of the battery.

More specifically, when the secondary battery is charged, if the electrons move to the negative electrode and charged, lithium ions are intercalated to the negative electrode to achieve charge neutrality. At this time, lithium ions can be occluded at the site where the electrolyte is impregnated, that is, where the ion migration path is maintained (wetting area), but occlusion is relatively difficult at the electrolyte non-wetting area.

Therefore, through the pre-aging step, the battery can be aged for 0.5 to 72 hours at room temperature and atmospheric pressure so that the electrolyte can be permeated into the positive and negative electrodes. For example, the pre-aging step (S10) may be performed at 20°C to 30°C, specifically 22°C to 28°C, more specifically 23°C to 27°C, and even more specifically 25°C to 27°C.

The pre-aged secondary battery goes through a formation process (S20) by initial-charging the battery within a predetermined range. Through this, a solid electrode interface (SEI) film is formed on the surface of a negative electrode. The formed SEI film reduces irreversibility of the secondary battery to a certain level even if charged to a high level at the charge/discharge step of the battery thereafter.

In an embodiment of the present invention, the charging at the formation step (S20) may be a process of charging the battery to reach a voltage corresponding to 55 to 95% of the full-charge voltage. In the formation step, when the charging voltage is in the above range, a SEI film may be stably formed on the surface of the negative electrode. Specifically, in the formation step, the charging end voltage may be 3.5 to 4.2V, and the charging may be performed at the C-rate of 1.0C or less. If the charging voltage is too low, a sufficient SEI film is not formed and long time is spent for the initial charging, so this is not appropriate for mass production, which is a problem. On the other hand, if the charging voltage is too high, an excessive load is applied to the battery, so overvoltage may easily occur, a uniform SEI film cannot be formed, and the shape of the battery may be deformed as the battery is inflated, which is a problem.

Further, when initial-charging the secondary battery, the charging may be performed at high temperature pressurization conditions. Since this pressurization condition can be appropriately set according to the specification of the battery, a detailed description is omitted.

Thereafter, a room temperature aging step (S30) of aging the initially charged secondary battery at room temperature is performed. In the room temperature aging step, as the SEI film generated in the formation step is stabilized, it is formed again in a uniform thickness.

In the room temperature aging step (S30), the aging temperature may be 20°C to 30°C, specifically 22°C to 28°C, more specifically 23°C to 27°C, and even more specifically 25°C to 27°C. If the aging temperature is high, the capacity of the battery may be reduced and cycle characteristics of the battery may be weakened by reaction of the electrolyte solution by heat. If the aging temperature is too low, the electrolyte solution is not sufficiently reacted on the surface of the electrode, thereby reducing the cycle characteristics of the battery. In the room temperature aging step, the aging time may be appropriately set according to the condition of the battery, and may be 1 to 7 days, specifically 2 to 5 days.

The room temperature aging step (S30) includes a process of measuring an open circuit voltage (OCV) of the secondary battery and determining whether the secondary battery has a low voltage defect. This may be configured to determine whether the secondary battery has a low voltage defect by using the open circuit voltage (OCV) measured at different time points. For example, a high temperature aged secondary battery is stored at room temperature, but OCV is measured at least at two time points. And by comparing the difference value between respective OCVs with a reference value stored in advance in the memory unit or the like, it is possible to select whether the secondary battery has a low voltage defect.

Specifically, the selection of whether the secondary battery has a low voltage defect is performed by measuring the voltage value V1 at the starting point of aging at room temperature and measuring the voltage value V2 at the ending point of aging at room temperature, and then determining whether the voltage drop (V1-V2), which is the difference between the start and end voltage values, satisfies the reference value range condition. More specifically, when the voltage drop amount measurement value of the secondary battery to be inspected is 20 mV, and the reference value of the voltage drop amount of the good product is 10 mV, the measured voltage drop amount is greater than the reference value, so such a secondary battery can be judged as having a low voltage defect.

The method of activating a secondary battery according to the present invention includes a step (S40) of full-charging the room-temperature-aged battery to have a voltage of 4.4V or more.

This is to increase the remaining amount of the electrolyte solution inside the electrode. When full-charging the secondary battery, a lot of lithium ions may be inserted into a space between lattice structures of the electrode active material according to a high SOC. As such, as the electrode is inflated, the internal pore becomes large, and more electrolyte solution may be permeated through a large pore. Further, the full-charging should be to charge the battery at a voltage of 4.4V or more, and this is to sufficiently charge the inside of the negative electrode even in the case of a high voltage cell by charging the battery at a high voltage. When the charging voltage is less than 4.4V, lithium ions are not charged up to the central portion of the negative electrode in a high voltage cell. As such, the electrode lattice in the central portion of the negative electrode becomes smaller than the surface of the negative electrode, and in this portion, it becomes difficult for the electrolyte solution to be permeated. Further, the upper limit of the voltage at the time of the full charge may be appropriately set by one of ordinary skill in the art. For example, it may be 5.2V or less, 5.0V or less, 4.8V or less, or 4.6V or less.

As described above, when the remaining amount of the electrolyte inside the electrode is increased, the maximum capacity may be secured for the battery having the same performance.

In one example, the step (S40) of full-charging the secondary battery includes a process of constant current (CC)-charging the secondary battery until reaching a full-charge voltage, a process of constant voltage (CV)-charging the secondary battery having reached the full-charge voltage, and a process of constant current (CC)-discharging the CV-charged secondary battery.

Namely, in the full-charging step, a lot of lithium ions are inserted into a space between lattices in active materials, and after that, more lithium ions, which have not been inserted during the CC charging process, may be inserted through the CV charging. Namely, the CV-charging process after the CC charge allows the additional permeation of the electrolyte solution to the inside of the electrode.

Specifically, the process of CC-charging the secondary battery is performed to charge the secondary battery at the C-rate of 0.5C to 0.9C, and this is performed to stably charge the secondary battery up to a predetermined voltage. In the CC-charging process, the secondary battery may be charged at the C-rate of 0.6 to 0.8C. When the size of the constant current is in the above range during the CC-charging process, the secondary battery may be stably charged without side reaction.

When the secondary battery is CC-charged, as the current becomes close to the full-charge voltage, the current gradually decreases, and when the current reaches the predetermined end voltage, the charging stops, and the secondary battery is then CV-charged. The process of CV-charging the secondary battery includes charging the secondary battery by a full-charge voltage until reaching a cutoff current of a CC-charge current value or less. When the CV charge is performed, the current value gradually decreases while maintaining the full-charge voltage. At this time, a current value, at which the charging stops, is called a cutoff current. The cutoff current is a value equal to or less than a CC-charging current value, and may be a current value in a range of 0.025C to a value which is smaller than the CC charging current value by 1 mA, specifically a current value in a range of 0.1C to a value which is smaller than the CC charging current value by 1 mA, and more specifically a current value in a range of 0.2C to a value which is smaller than the CC charging current value by 1 mA. Namely, a preferred cutoff current value is a value equal to or less than a CC charging current value and may be a value which is smaller than the CC charging current value by 1 mA. Specifically, when the cutoff current value is greater than the CC charging current value, the CV charging process is not sufficiently performed. As such, it may be difficult for the electrolyte solution to be permeated into the electrode. On the contrary, when the cutoff current value is excessively small, the remaining amount of the electrolyte solution may increase by the excessive CV charging, but the thickness of the electrode may increase, which is a problem.

On the other hand, the full-charged secondary battery is CC-discharged, at which the secondary battery is discharged with a constant current. In this case, the process of CC-discharging the secondary battery includes discharging the full-charged secondary battery until reaching a voltage corresponding to 80% of the full-charge voltage or a full-discharge voltage. Namely, the CC-discharging is performed, the secondary battery may be fully discharged, or the secondary battery may be discharged until reaching a voltage corresponding to 80% of the full-charge voltage. More specifically, when the full-charged secondary battery may be discharged until a voltage at the time of a full discharge or a voltage corresponding to 55% of the full-charge voltage. For example, the discharge end voltage may be 3.0 to 3.5V.

The battery, which has reached a certain voltage after CC charging, may go through a recharging step until reaching a reset shipping voltage. Likewise, the secondary battery is activated while repeating a charge/discharge process, and gas is generated due to reaction between the electrode and the electrolyte solution.

In another example, the step (S40) of full-charging the secondary battery includes a process of CC-charging the secondary battery until reaching a full-charge voltage, and a process of CC-discharging the secondary battery having reached the full-charge voltage, wherein the CC-charging process and the CC-discharging process are consecutively performed. At this time, details about the CC charging process and the CC discharge process are the same as those described above.

As described above, the CV charging is performed to maximize the remaining amount of the electrolyte solution by additionally inserting lithium ions after the CC charging. However, if a high SOC is maintained through CV charging, the thickness of the battery may become excessively large. In particular, a pouch-type battery is sensitive to an increase in the thickness. As such, if the CV charging process is omitted and the CC discharging is performed right after the CC charging is completed, it is possible to secure the remaining amount of the electrolyte solution and at the same time, achieve an appropriate thickness increase rate.

Further, in another example, the method of activating a secondary battery according to the present invention may further include an additional charging step (S31).

FIG. 4 is a graph showing the process of the activation method according to another embodiment of the present invention.

Referring to FIG. 4, the additional charging step (S31) is performed between the room temperature aging step (S30) and the full-charging step (S40) and is a second-charging process the room-temperature-aged secondary battery after the initial charging. In the present invention, the secondary battery may be sufficiently formed by performing the charging process two times. In the additional charging step, the charging end voltage is in the range of 3.5 to 4.2V and may be set to be greater than the charging end voltage at the initial-charging step. The additionally charged battery may be discharged so that the voltage becomes 3.0 to 4.0V.

Further, according to the activation method of the present invention, the side reaction gas, which is generated inside the secondary battery by the charging and aging of the secondary battery, may cause a swelling phenomenon of the battery. As such, a degassing step (S50) for removing the side reaction gas after the full-charging step (S40) may be performed.

In the present invention, various degassing technologies known at the time of filing the present application may be employed. For example, the degassing process may be performed by cutting an extended portion and sealing the cut portion in a pouch-type secondary battery having one side extended. However, since such a degassing technique is widely known to those skilled in the art, a more detailed description is omitted here.

Further, referring to FIGS. 3 and 4, after the degassing step (S50), a step (S60) of shipping-charging a secondary battery may be additionally performed. The shipping-charging step (S60) is performed to charge the secondary battery, which has not been evenly charged at the previous charge/discharge and aging steps, to an appropriate level before shipping.

In the activation method according to the present invention, the step of shipping-charging the secondary battery may include a process of charging the secondary battery to reach a preset shipping voltage after performing a full charge and a full discharge for the secondary battery from which internal gas has been removed. More specifically, after charging the secondary battery to a level corresponding to 95% (SOC 95%) or more of a designed capacity and then discharging the secondary battery to a level corresponding to 5% (SOC 5%) or less of the designed capacity, the secondary battery may be charged again to a level corresponding to 40 to 60% (SOC 40 to 60%) of the designed capacity. The room temperature aging step may be additionally performed for the shipping-charged secondary battery. The time when the room temperature aging step is performed may be appropriately set according to the process conditions. For example, it may be in the range of 1 to 4 days.

Further, in the activation method according to the present invention, a step for detecting a defect of a secondary battery may be performed a plurality of times, and as described above, in the room temperature aging step, a secondary battery having a low voltage defect may be detected. In addition, the activation method according to the present invention may include a process of inspecting the charging capacity of the secondary battery in the step of full-charging the secondary battery and the step of shipping-charging the secondary battery. Methods for measuring the charging capacity of the secondary battery are well known to those skilled in the art, so more detailed description thereof is omitted here.

Further, as described above, the present invention provides a method of manufacturing a secondary battery including an activation method of a secondary battery as described above. The composition of such a secondary battery is as described above.

Hereinafter, the present invention will be described in detail with reference to examples. However, the embodiments according to the present invention may be modified into various other forms, and the scope of the present invention should not be construed as being limited to the examples described below. The examples of the present invention are provided to more fully describe the present invention to those skilled in the art.

### Preparation Example 1

A positive electrode mixture was prepared by mixing 96.7 parts by weight of Li[Ni_{0.6}Mn_{0.2}Co_{0.2}]O₂ serving as a positive electrode active material, 1.3 parts by weight of graphite serving as a conductive material, and 2.0 parts by weight of polyvinylidene fluoride (PVdF) serving as a binder. The positive electrode mixture slurry was prepared by dispersing the obtained positive electrode mixture in 1-methyl-2-pyrrolidone functioning as a solvent. A positive electrode was prepared by coating, drying, and pressing the slurry on both sides of an aluminum foil having a thickness of 20 µm, respectively.

A negative electrode mixture was prepared by mixing 97.6 parts by weight of artificial graphite and natural graphite that function as negative electrode active materials (weight ratio: 90 : 10), 1.2 parts by weight of styrene-butadiene rubber (SBR) that functions as a binder, and 1.2 parts by weight of carboxymethyl cellulose (CMC). The negative electrode mixture slurry was prepared by dispersing the negative electrode mixture in ion-exchanged water functioning as a solvent. A negative electrode was prepared by coating, drying, and pressing the slurry on both sides of an copper foil having a thickness of 20 µm.

A non-aqueous electrolyte solution was prepared by dissolving LiPF₆ in an organic solvent, in which ethylene carbonate (EC), propylene carbonate (PC), and diethyl carbonate (DEC) were mixed in a composition of 3 : 3 : 4 (volume ratio). Herein, LiPF₆ was dissolved in the organic solvent to be a concentration of 1.0M.

A lithium secondary battery was prepared by laminating a porous polyethylene separator between the positive electrode and the negative electrode prepared above and storing them in a pouch, and then injecting the electrolyte solution.

### Preparation Example 2

A secondary battery was manufactured in the same manner as in preparation example 1 except that LiCoO₂ was used as the positive electrode active material, and artificial graphite was used as the negative electrode active material.

### Example 1

A secondary battery was pre-aged at a room temperature of 25°C for 24 hours, and the pre-aged secondary battery was initially charged at the C-rate of 0.2C until reaching the voltage of 3.9V. The initial-charged secondary battery was aged at a room temperature of 25°C for 3 days. When the room temperature aging is completed, the secondary battery was CC-charged at the C-rate of 0.7C until the voltage reaches 4.4V. If the voltage of the secondary battery reaches 4.4V, the secondary battery was immediately CC-discharged without CV-charging. Specifically, the secondary battery was CC-discharged at the C-rate of 0.7C until reaching the voltage of 3.5V. Thereafter, the secondary battery was recharged until reaching the shipping voltage.

Thereafter, a degassing process of removing an internal gas of the battery was performed, and a shipping-charging step of full-charging, full-discharging, and then recharging until SOC reaches 55% was performed. These series of processes were performed as shown in FIG. 3.

### Example 2

A secondary battery was pre-aged at a room temperature of 25°C for 24 hours, and the pre-aged secondary battery was initially charged at the C-rate of 0.2C until reaching the voltage of 3.9V. The initial-charged secondary battery was aged at a room temperature of 25°C for 3 days. When the room temperature aging is completed, the secondary battery was additionally charged until the voltage reaches 4.2V, and the battery was discharged until the voltage reached 3.5V. Thereafter, the secondary battery was CC-charged at the C-rate of 0.7C until the voltage reached 4.4V. If the voltage of the secondary battery reaches 4.4V, the secondary battery was immediately CC-discharged without CV-charging. Specifically, the secondary battery was CC-discharged at the C-rate of 0.7C until reaching the voltage of 3.0V. Thereafter, the secondary battery was recharged until reaching the shipping voltage.

Thereafter, a degassing process of removing an internal gas of the battery was performed, and a shipping-charging step of full-charging, full-discharging, and then recharging until SOC reaches 55% was performed. These series of processes were performed as shown in FIG. 4.

### Comparative Example 1

A secondary battery was pre-aged at a room temperature of 25°C for 24 hours, and the pre-aged secondary battery was initially charged at the C-rate of 0.2C until reaching the voltage of 3.9V. The initial-charged secondary battery was aged at a room temperature of 25°C for 3 days. When the room temperature aging is completed, the secondary battery was CC-charged at the C-rate of 0.7C until the voltage reaches 4.2V. When the voltage of the secondary battery reached 4.2V, the secondary battery was CC-discharged at the C-rate of 0.7C until reaching the voltage of 3.5V.

Thereafter, a degassing process of removing an internal gas of the battery was performed, and a shipping-charging step of full-charging, full-discharging, and then recharging until SOC reaches 55% was performed. These series of processes were performed as shown in FIG. 1.

### Experimental Example 1

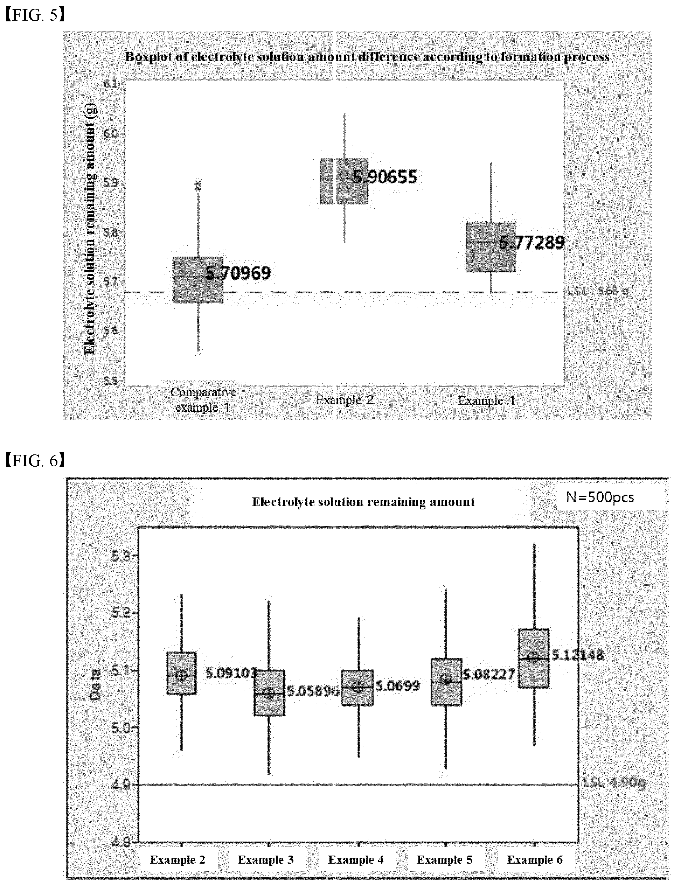

After preparing 150 batteries according to the preparation Example 1, the activation methods according to the example 1, example 2 and comparative example 1 were performed, and the remaining amount of the electrolyte solution was measured. Further, when the remaining amount of the electrolyte solution was less than 5.68g, it was determined as being defective. Specifically, the remaining amount of the electrolyte solution was determined by measuring the difference between the weight of the electrode assembly having completed the formation process and the weight of the dried electrode assembly. The remaining amount of the electrolyte solution and the defect rate are shown in Table 1 and FIG. 5.

**[Table 1]**

| | Example 1 | Example 2 | Comparative Example 1 |
|---|---|---|---|
| Average electrolyte solution remaining | 5.77 | 5.91 | 5.71 |
| amount (g) | | | |
| Defect rate (%) | 0.0 | 0.0 | 31.4 |

Referring to Table 1 and FIG. 5, the average remaining amount of the electrolyte solution was greater in examples 1 and 2, in which a full charge was performed with the voltage of 4.4V or more, than in comparative example 1. Further, the rate, at which the remaining amount of the electrolyte solution failed to reach a predetermined standard, was greater in comparative example 1 than in examples 1 and 2. Namely, as in examples 1 and 2, as the secondary battery is full-charged with a voltage of 4.4V, the remaining amount of the electrolyte solution in the electrode is further secured, which shows that the battery performance such as capacity is excellent.

### Example 3

A secondary battery was pre-aged at a room temperature of 25°C for 24 hours, and the pre-aged secondary battery was initially charged at the C-rate of 0.2C until reaching the voltage of 3.9V. The initial-charged secondary battery was aged at a room temperature of 25°C for 3 days. When the room temperature aging is completed, the secondary battery was additionally charged until the voltage reaches 4.2V, and the battery was discharged until the voltage reached 3.5V. Thereafter, the secondary battery was CC-charged at the C-rate of 0.7C until the voltage reached 4.4V. If the voltage of the secondary battery reached 4.4V, the charging was continuously performed until the current of the secondary battery reached the cutoff current value of 0.5C in a state that the voltage of the battery is maintained. If the current of the secondary battery reached a cutoff current value, the secondary battery was CC-discharged at the C-rate of 0.7C until reaching the voltage of 3.5V.

Thereafter, a degassing process of removing an internal gas of the battery was performed, and a shipping-charging step of full-charging, full-discharging, and then recharging until SOC reaches 55% was performed. These series of processes were performed as shown in FIG. 4.

### Example 4

The formation of the secondary battery was performed as shown in example 3 except that the cutoff current was set to 0.2C.

### Example 5

The formation of the secondary battery was performed as shown in example 3 except that the cutoff current was set to 0.1C.

### Example 6

The formation of the secondary battery was performed as shown in example 3 except that the cutoff current was set to 0.025C.

### Experimental Example 2

After preparing 500 batteries according to the preparation Example 2, the activation methods according to the examples 2 to 6 were performed, and the remaining amount of the electrolyte solution was measured. At this time, when the remaining amount of the electrolyte solution was less than 4.90g, it was determined as being defective. The result was shown in FIG. 6.

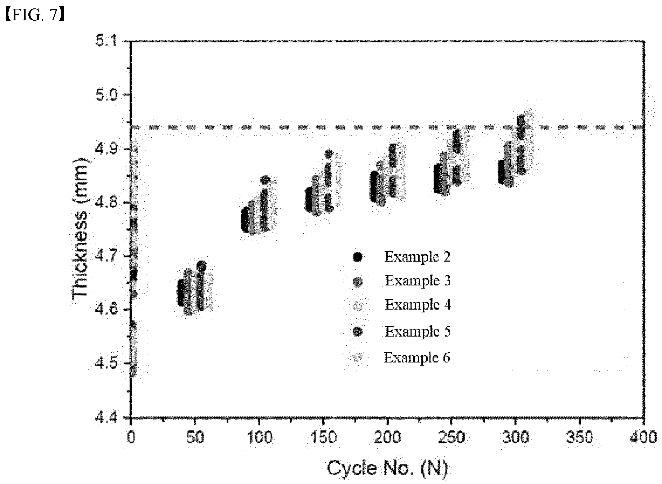

Further, the thicknesses of the negative electrode according to the number of cycles were measured for examples 2 to 6. The result is shown in FIG. 7. In FIG. 7, one point on the graph is about thickness distribution of an electrode according to the cycle, and the thickness distribution of the electrode according to examples 2 to 6 was illustrated in order from the left side

Referring to FIG. 6, the remaining amount of the electrolyte solution in example 2, in which CC discharge was performed right after CC charge without CV charge, was not significantly different from the remaining amount of the electrolyte solution in examples 3 to 6. Herein, when the CV charge is performed for a longer time (when the cutoff current is small), the remaining amount of the electrolyte solution increases, and this is because the electrolyte solution has permeated into the pores which have increased in the electrode as the lithium ions are sufficiently permeated into the central portion of the electrode.

Referring to FIG. 7, the average thickness of the electrode was smaller in example 2, in which the CV charging process was not performed, than in examples 3 to 6, and it was shown that as cycles were performed, the thickness change of the electrode became smaller. Namely, according to the method of activating a secondary battery of the present invention, it is possible to further increase the remaining amount of the electrolyte solution by performing CV charge after the full-charging process and it is possible to minimize the increase in the thickness of the electrode by omitting the CV charging process.

The above description is merely illustrative of the technical idea of the present invention, and those skilled in the art to which the present invention pertains may make various modifications and variations without departing from the essential characteristics of the present invention. Therefore, the drawings disclosed in the present invention are not intended to limit the technical idea of the present invention but to describe the present invention, and the scope of the technical idea of the present invention is not limited by these drawings. The scope of protection of the present invention should be interpreted by the following claims.

On the other hand, in this specification, terms indicating directions such as up, down, left, right, before, and after are used, but it is obvious that these terms are for convenience of description only and may change depending on the location of the object or the location of the observer.

## Claims

1. A method of activating a secondary battery, the method comprising in sequence: a pre-aging step (S10) of aging a secondary battery, where an electrode assembly and an electrolyte solution are accommodated in a battery case, at a room temperature; a formation step (S20) of initial-charging the pre-aged secondary battery; a room temperature aging step (S30) of aging the initial-charged secondary battery at a room temperature; a step of full-charging (S40) the room-temperature-aged secondary battery to a voltage of 4.4V or more; and a degassing step (S50) of removing gas inside the secondary battery.

2. The method of claim 1, wherein in the formation step, the secondary battery is charged to reach a voltage in a range corresponding to 55 to 90% of a full-charge voltage.

3. The method of claim 1, wherein the room temperature aging step includes a process of measuring an open circuit voltage (OCV) of the secondary battery and determining whether the secondary battery has a low voltage defect.

4. The method of claim 1, wherein the step of full-charging the secondary battery includes a process of constant current (CC)-charging the secondary battery until reaching a full-charge voltage, a process of constant voltage (CV)-charging the secondary battery having reached the full-charge voltage, and a process of constant current (CC)-discharging the CV-charged secondary battery.

5. The method of claim 4, wherein the process of CC-charging the secondary battery includes charging the secondary battery at a C-rate of 0.5 to 0.9C.

6. The method of claim 4, wherein the process of CV-charging the secondary battery includes charging the secondary battery by a full-charge voltage until reaching a cutoff current of a CC-charge current value or less.

7. The method of claim 4, wherein the process of CC-discharging the secondary battery includes discharging the full-charged secondary battery until reaching a voltage corresponding to 80% of the full-charge voltage or a full-discharge voltage.

8. The method of claim 4, further comprising a process of recharging the CC-discharged secondary battery until reaching a preset shipping voltage.

9. The method of claim 1, wherein the step of full-charging the secondary battery includes a process of CC-charging the secondary battery until reaching a full-charge voltage, and a process of CC-discharging the secondary battery having reached the full-charge voltage,
wherein the CC-charging process and the CC-discharging process are consecutively performed.

10. The method of claim 1, further comprising an additional charging step of second-charging the secondary battery between the room temperature aging step and the step of full-charging the secondary battery.

11. The method of claim 1, further comprising a step of shipping-charging the secondary battery after the degassing step.

12. The method of claim 11, wherein the step of shipping-charging the secondary battery includes a process of charging the secondary battery to reach a preset shipping voltage after performing a full charge and a full discharge for the secondary battery from which internal gas has been removed.

13. The method of claim 11, further comprising a step of aging the secondary battery at a room temperature after the step of shipping-charging the secondary battery.

14. The method of claim 11, wherein the step of full-charging the secondary battery and the step of shipping-charging the secondary battery include a step of checking a charging capacity of the secondary battery.

15. A method of manufacturing a secondary battery including an activation method according to one of claims 1 to 14.

## Patentansprüche

1. Verfahren zum Aktivieren einer Sekundärbatterie, wobei das Verfahren der Reihe nach umfasst: einen Voralterungsschritt (S10) zum Altern einer Sekundärbatterie, wobei eine Elektrodenanordnung und eine Elektrolytlösung in einem Batteriegehäuse untergebracht sind, bei einer Raumtemperatur; einen Bildungsschritt (S20) zum anfänglichen Laden der vorgealterten Sekundärbatterie; einen Raumtemperaturalterungsschritt (S30) zum Altern der anfänglich geladenen Sekundärbatterie bei einer Raumtemperatur; einen Schritt zum vollständigen Laden (S40) der bei Raumtemperatur gealterten Sekundärbatterie auf eine Spannung von 4,4 V oder mehr; und einen Entgasungsschritt (S50) zum Entfernen von Gas im Inneren der Sekundärbatterie.

2. Verfahren nach Anspruch 1, wobei in dem Bildungsschritt die Sekundärbatterie geladen wird, um eine Spannung in einem Bereich zu erreichen, der 55 bis 90 % einer Vollladespannung entspricht.

3. Verfahren nach Anspruch 1, wobei der Raumtemperaturalterungsschritt einen Prozess zum Messen einer Leerlaufspannung (OCV) der Sekundärbatterie und zum Bestimmen, ob die Sekundärbatterie einen Niederspannungsdefekt aufweist, umfasst.

4. Verfahren nach Anspruch 1, wobei der Schritt zum vollständigen Laden der Sekundärbatterie einen Prozess zum Laden der Sekundärbatterie mit konstantem Strom (CC), bis eine Vollladespannung erreicht ist, einen Prozess zum Laden der Sekundärbatterie mit konstanter Spannung (CV), wenn die Vollladespannung erreicht ist, und einen Prozess zum Entladen der CV-geladenen Sekundärbatterie mit konstantem Strom (CC) umfasst.

5. Verfahren nach Anspruch 4, wobei der Prozess zum CC-Laden der Sekundärbatterie das Laden der Sekundärbatterie mit einer C-Rate von 0,5 bis 0,9 C umfasst.

6. Verfahren nach Anspruch 4, wobei der Prozess zum CV-Laden der Sekundärbatterie das Laden der Sekundärbatterie mit einer Vollladespannung umfasst, bis ein Abschaltstrom eines CC-Ladestromwerts oder weniger erreicht ist.

7. Verfahren nach Anspruch 4, wobei der Prozess zum CC-Entladen der Sekundärbatterie das Entladen der vollständig geladenen Sekundärbatterie umfasst, bis eine Spannung erreicht ist, die 80 % der Vollladespannung oder einer Vollentladespannung entspricht.

8. Verfahren nach Anspruch 4, ferner umfassend einen Prozess zum Wiederaufladen der CC-entladenen Sekundärbatterie, bis eine voreingestellte Ladespannung erreicht ist.

9. Verfahren nach Anspruch 1, wobei der Schritt zum vollständigen Laden der Sekundärbatterie einen Prozess zum CC-Laden der Sekundärbatterie, bis eine Vollladespannung erreicht ist, und einen Prozess zum CC-Entladen der Sekundärbatterie, wenn die Vollladespannung erreicht ist, umfasst,
wobei der CC-Ladeprozess und der CC-Entladeprozess nacheinander durchgeführt werden.

10. Verfahren nach Anspruch 1, ferner umfassend einen zusätzlichen Ladeschritt zum Zweitladen der Sekundärbatterie zwischen dem Raumtemperaturalterungsschritt und dem Schritt zum vollständigen Laden der Sekundärbatterie.

11. Verfahren nach Anspruch 1, ferner umfassend einen Schritt zum Ladeladen der Sekundärbatterie nach dem Entgasungsschritt.

12. Verfahren nach Anspruch 11, wobei der Schritt zum Ladeladen der Sekundärbatterie einen Prozess zum Laden der Sekundärbatterie umfasst, um eine voreingestellte Ladespannung zu erreichen, nachdem eine vollständige Ladung und eine vollständige Entladung für die Sekundärbatterie durchgeführt wurde, aus der internes Gas entfernt wurde.

13. Verfahren nach Anspruch 11, ferner umfassend einen Schritt zum Altern der Sekundärbatterie bei einer Raumtemperatur nach dem Schritt zum Ladeladen der Sekundärbatterie.

14. Verfahren nach Anspruch 11, wobei der Schritt zum vollständigen Laden der Sekundärbatterie und der Schritt zum Ladeladen der Sekundärbatterie einen Schritt zum Überprüfen einer Ladekapazität der Sekundärbatterie umfassen.

15. Verfahren zum Herstellen einer Sekundärbatterie, umfassend ein Aktivierungsverfahren nach einem der Ansprüche 1 bis 14.

## Revendications

1. Procédé d'activation d'une batterie secondaire, le procédé comprenant en séquence : une étape de pré-vieillissement (S10) comportant le vieillissement d'une batterie secondaire, un ensemble d'électrodes et une solution d'électrolyte étant contenus dans un boîtier de batterie, à la température ambiante ; une étape de formation (S20) comportant la charge initiale de la batterie secondaire pré-vieillie ; une étape de vieillissement à la température ambiante (S30) comportant le vieillissement de la batterie secondaire ayant reçu une charge initiale à la température ambiante ; une étape de charge complète (S40) de la batterie secondaire vieillie à la température ambiante jusqu'à une tension de 4,4 V ou davantage ; et une étape de dégazage (S50) pour l'extraction du gaz à l'intérieur de la batterie secondaire.

2. Procédé selon la revendication 1, dans lequel, à l'étape de formation, la batterie secondaire est chargée pour atteindre une tension dans une plage allant de 55 à 90% d'une charge complète.

3. Procédé selon la revendication 1, l'étape de vieillissement à la température ambiante comprenant un processus de mesure d'une tension à circuit ouvert (OCV) de la batterie secondaire, et la détermination de la présence, dans la batterie secondaire, d'un éventuel défaut de basse tension.

4. Procédé selon la revendication 1, l'étape de charge complète de la batterie secondaire comprenant un processus de charge à courant constant (CC) de la batterie secondaire jusqu'à ce qu'elle atteigne une tension de charge complète, un processus de charge à tension constante (CV) de la batterie secondaire ayant atteint la charge à complète, ainsi qu'un processus de décharge à courant constant (CC) de la batterie secondaire ayant reçu une charge CV.

5. Procédé selon la revendication 4, le processus de charge CC de la batterie secondaire comprenant la charge de la batterie secondaire à un taux C de 0,5 à 0,9C.

6. Procédé selon la revendication 4, le processus de charge CV de la batterie secondaire comprenant la charge de la batterie secondaire par une tension de charge complète jusqu'à ce qu'elle atteigne un courant de coupure d'une valeur de courant de charge CC ou inférieur.

7. Procédé selon la revendication 4, le processus de décharge CC de la batterie secondaire comprenant la décharge de la batterie secondaire ayant reçu une charge complète jusqu'à ce qu'elle atteigne une tension correspondant à 80% de la tension de charge complète ou une tension de décharge complète.

8. Procédé selon la revendication 4, comprenant en outre un processus de recharge de la batterie secondaire déchargée CC jusqu'à ce qu'elle atteigne une tension de transport préétablie.

9. Procédé selon la revendication 1, l'étape de charge complète de la batterie secondaire comprenant un processus de charge CC de la batterie secondaire jusqu'à ce qu'elle atteigne une tension de charge complète, et un processus de décharge CC de la batterie secondaire ayant atteint la tension de charge complète,
le processus de charge CC et le processus de décharge CC étant effectués consécutivement.

10. Procédé selon la revendication 1, comprenant en outre une étape de charge supplémentaire comportant une deuxième charge de la batterie secondaire entre l'étape de vieillissement à la température ambiante et l'étape de charge complète de la batterie secondaire.

11. Procédé selon la revendication 1, comprenant en outre une étape de charge de transport de la batterie secondaire suite à l'étape de dégazage.

12. Procédé selon la revendication 11, l'étape de charge de transport de la batterie secondaire comprenant un processus de charge de la batterie secondaire pour atteindre une tension de transport préétablie après avoir effectué une charge complète et une décharge complète de la batterie secondaire de laquelle le gaz interne a été extrait.

13. Procédé selon la revendication 11, comprenant en outre une étape de vieillissement à la température ambiante de la batterie secondaire, après avoir effectué l'étape de charge de transport de la batterie secondaire.

14. Procédé selon la revendication 11, l'étape de charge complète de la batterie secondaire et l'étape de charge de transport de la batterie secondaire comprenant une étape de contrôle d'une capacité de charge de la batterie secondaire.

15. Procédé de fabrication d'une batterie secondaire comprenant un procédé d'activation selon une quelconque des revendications 1 à 14.
